# EUROPÄISCHE PATENTSCHRIFT

(11) **EP 3 026 766 B1**
(45) Veröffentlichungstag und Bekanntmachung des Hinweises auf die Patenterteilung: **20.12.2023**
(21) Anmeldenummer: 15195032.6
(22) Anmeldetag: 17.11.2015
(51) Int. Cl.: H02G 3/06, H02G 3/08

(54) **ROHREINFÜHRUNG FÜR EINE UNTERPUTZDOSE**
PIPE INTRODUCTION FOR A BUILT-IN SOCKET
INTRODUCTION DE TUBE POUR UNE BOITE DE BRANCHEMENT

(30) Priorität: 17.11.2014 CH 17742014
(43) Veröffentlichungstag der Anmeldung: 01.06.2016
(73) Patentinhaber: Agro AG, 5502 Hunzenschwil (CH)
(72) Erfinder: BRUNNER, Fabian, 4656 Starrkirch-Wil (CH); SIEBEKING, Thomas, 58513 Lüdenscheid (DE)
(74) Vertreter: Rentsch Partner AG

(56) Entgegenhaltungen:
- EP-A1- 1 737 094
- EP-A1- 2 128 948
- EP-A1- 2 533 085
- EP-A1- 2 549 603
- EP-A2- 0 245 233
- DE-U1-202004 005 278
- DE-U1-202009 006 645
- NL-A- 7 200 350
- NL-C2- 1 034 797
- US-A1- 2008 217 917
- US-B1- 6 800 808

## Beschreibung

### TECHNISCHES GEBIET

Die Erfindung betrifft Rohreinführungen für Unterputzdosen.

### HINTERGRUND DER ERFINDUNG

In Bauwerken werden für das Anbringen elektrischer Schalter, Steckdosen, Lampen, Apparate oder für Verzweigungen an den dazu vorgesehenen Stellen im Gebäude Unterputzdosen verwendet, welche häufig einbetoniert werden. Unter Unterputzdosen werden beispielsweise Einlasskästen, Deckendübel, Unterputzabzweigdosen, Verteilerdosen und dergleichen verstanden. Solche Unterputzdosen weisen typischerweise ein zylinder- oder quaderförmiges Gehäuse mit Boden auf, welches einen über eine Bedienöffnung zugänglichen Anschlussraum ausbildet. Umfangsseitig in der Seitenwand oder im Boden weisen sie zudem oft eine Mehrzahl von Rohreinführungen in Form von Muffen und Adaptern auf, welche typischerweise zur Befestigung von Kabelschutzschläuchen zur Durchführung von Anschlusskabeln ausgebildet sind.

Bei den Rohreinführungen sind verschiedene Eigenschaften erwünscht, welche unter anderem einfache Handhabung, verlässliche Halterung von angeschlossenen Kabelschutzschläuchen, gute Abdichtung des Inneren der Unterputzdose gegenüber noch frischem Frischbeton usw. umfassen. In der Regel weisen die Rohreinführungen Verschlusselemente auf, welche das Innere der Unterputzdose gegenüber Frischbeton abdichten und bei Bedarf für den Anschluss eines Kabelschutzschlauches entfernt werden können. Die Entfernung der Verschlusselemente und der Anschluss eines Kabelschutzschlauches sollen dabei möglichst einfach sein.

EP21 28948A1 wurde 2009 im Namen von Kaiser GmbH & Co. KG publiziert und beschreibt ein Installationsteil, insbesondere für elektrotechnische Zwecke, vorzugsweise Installationsdose für die Betonbauinstallation, wobei das Installationsteil an einer Wandung mindestens einen hohlzylindrischen Stutzen aufweist, der zum Einführen eines Installationsrohres, insbesondere eines gewellten Installationsrohres, bestimmt ist und dessen an die Wandung anschliessendes Ende durch ein ausschlagbares Wandungsteil verschlossen ist, wobei von dem Wandungsteil eine Ausschlaghülse abragt, die mit ihrem freien Ende aus dem Stutzen vorragt. Die Ausschlaghülse weist radial aussen mindestens eine Längsrippe, vorzugsweise gegenüberliegend zwei Längsrippen auf, wobei die Längsrippe oder die Längsrippen um ein solches Mass radial von der Ausschlaghülse abragen, dass das Aufstecken von üblichen Installationsrohren auf die Ausschlaghülse verhindert ist. Durch die Anordnung der entsprechenden Längsrippe oder der entsprechenden Längsrippen wird erreicht, dass der Benutzer des Installationsteiles nicht irrtümlich auf die Ausschlaghülse ein Installationsrohr aufstecken kann.

EP2360800A2 wurde 2011 im Namen von Kaiser GmbH & Co. KG publiziert und beschreibt ein Installationsteil, insbesondere für elektrische Installationen, zum Einführen oder Durchführen mindestens eines Leerrohres, wobei das Installationsteil mindestens eine Wandung mit mindestens einem durch eine Sollbruchstelle umgrenzten Wandungsbereich aufweist, der durch Heraustrennen des Wandungsbereiches einen Einlass oder Durchlass für ein Leerrohr bildet, wobei der Wandungsbereich mindestens eine Eingriffskontur für ein Werkzeug, insbesondere die Klinge eines Schraubendrehers, zum Ausbrechen des Wandungsbereiches aufweist. Der Wandungsbereich ist in einem angemessenen Masse versteift, um zu erreichen, dass beim Einsetzen des Werkzeuges in die Eingriffskontur, insbesondere beim Einsetzen der Klinge eines Schraubendrehers, die Kraft auf möglichst weite Bereiche des Wandungsbereiches verteilt wird, so dass nicht allein der die Eingriffskontur unmittelbar umgebende Wandbereich ausgebrochen wird, sondern der komplette durch die Sollbruchstelle umgrenzte Wandungsbereich.

DE7734963U1 wurde 1978 im Namen von Erwin Schimmeister publiziert und beschreibt eine Einbau-Installationsdose in Verbindung mit einem oder mehreren Leerrohren zur Aufnahme von über ausbrechbare Öffnungen in die Dose eingeführten Leitungen, wobei die Leerrohre mit Hilfe eines Dichtungsstückes mit der Dose verbunden sind. Mit Hilfe der Dichtungsstücke wird das Eindringen von flüssigem Baumaterial, wie Betonmilch, in die Installationsdose vermieden.

EP1737094A1 wurde 2006 im Namen von AGRO publiziert und beschreibt eine Muffe die zum auszugssicheren Einführen eines gewellten Rohres, beispielsweise in eine Unterputzdose dient, die eine hohlzylindrische Wandung aufweist. An einer Innenseite weist die Wandung radial nach innen vorspringende Haltemittel auf, die für ein Wellrohr mit grösserem Aussendurchmesser ausgebildet sind. An der Innenseite der Wandung sind zweite nach innen vorspringende Haltemittel für ein Wellrohr mit kleinerem Aussendurchmesser angeordnet. Die zweiten Mittel sind an einer Membran angeformt und können durch Ausschlagen der Membran freigelegt werden. An der gleichen Muffe können gewellte Rohe mit unterschiedlichem Aussendurchmesser angeschlossen werden.

EP2549603A1 wurde 2013 im Namen von AVE SPA publiziert und beschreibt ein Verbindungselement zwischen Rohren und Gehäusen, insbesondere für elektrische Systeme, mit einem Körper, der mit einer Längsaussparung versehen ist, wobei das Element außerhalb des Körpers eine dazwischenliegende Kehle aufweist, die dazu bestimmt ist, dicht mit dem Umriss eines Lochs verbunden zu werden, das in der Wand einer dosenförmigen Struktur erhalten wurde; einen ersten Abschnitt, der sich von einem Teil der Verengung aus entwickelt; einen zweiten Abschnitt, der sich von der gegenüberliegenden Seite der Verengung relativ zum ersten Abschnitt aus entwickelt und mit einem Einlass in die Aussparung endet, wobei eine diametrale Wand die Längsaussparung verschließt. Der zweite Abschnitt ist so konfiguriert, dass er mehrere innere Sitze mit unterschiedlichem Durchmesser in der Aussparung definiert, und er umfasst mehrere ringförmige Membranen, die sich radial innerhalb der Aussparung jeweils von einem entsprechenden Sitz aus erstrecken, wobei jede Membran eine Durchgangsöffnung mit einem entsprechenden Durchmesser definiert und so konfiguriert ist, dass sie abdichtend mit einem in die Aussparung einzuführenden Rohr verbunden ist, das einen mit dem entsprechenden Durchmesser der Durchgangsöffnung der Membran kompatiblen Durchmesser aufweist.

NL1034797C wurde 2007 im Namen von ABB BV publiziert und beschreibt eine Dose für eine Betonwand mit einer umlaufenden Wand, an einer dem Boden abgewandten Seite weist diese eine Zugangsöffnung auf, wobei die Dose mit einer Anzahl von doppelten linken Tüllen versehen ist, die von der Wand zum Anschluss eines Installationsrohrs vorstehen. Die Tülle ist mit einer Tülle versehen, die die beiden Öffnungen verschließt und eine Membran oder Folie enthält, die beim Einführen des Rohrs in die Tüllen durchstochen wird. Die vorgesehene Membran oder Folie ist von der Wand beabstandet und befindet sich am jeweiligen Ende der Tüllen.

**.**EP2533085A1 wurde 2012 im Namen von TYCO ELECTRONICS publiziert und beschreibt einen Telekommunikationsanschluß mit einem Anschluß, der einen Anschlußkörper mit einem kreisförmigen Ende und einem Abreißhahn umfasst, der an dem kreisförmigen Ende angeordnet ist. Ein Gurtband dichtet den Hahn an dem kreisförmigen Ende ab. Der Hahn umfasst einen Hahnkörper mit einem vorstehenden Griff und einem Verstärkungselement. In einer Ausführungsform umfasst das Verstärkungselement einen kugelförmigen mittleren Körperabschnitt. Eine weitere Ausführungsform eines Verstärkungselements umfasst eine sich verjüngende kreisförmige Rippe, die sich um den Umfang des Hahnkörpers von dem Griff zu einer gegenüberliegenden Seite des Hahnkörpers erstreckt. Eine weitere Ausführungsform eines Verstärkungselements umfasst eine lineare Rippe, die an einer Innenfläche des Hahnkörpers angeordnet ist. Ein Spalt ist innerhalb der Öffnung vorgesehen, um das Entfernen des Hahns zu erleichtern. Ein Verwendungsverfahren umfasst den Zugang zu einer Öffnung durch Bereitstellen eines Abreißhahns, der an einem kreisförmigen Ende eines Öffnungskörpers mit einem Gurtband befestigt ist, Ergreifen eines vorstehenden Griffs und Ziehen des Griffs um das Gurtband zu zerreißen, um eine kreisförmige Öffnung zu bilden, wobei ein Verstärkungselement ein Brechen des Hahnkörpers verhindert.Die Aufgabe der Erfindung ist es, den Stand der Technik von Rohreinführungen für Unterputzdosen zu verbessern.

### DARSTELLUNG DER ERFINDUNG

Die Erfindung betrifft eine Rohreinführung für eine Unterputzdose, bzw., eine Unterputzdose mit mindestens einer solchen Rohreinführung.

Der Schutzbereich wird durch die Patentansprüche bestimmt. Die beanspruchte erfindungsgemässe Rohreinführung ist in den Ansprüchen beschrieben.

Die erfindungsgemässe Rohreinführung umfasst eine Öffnung zum Wirkverbinden eines Kabelschutzschlauches mit der Unterputzdose, ein Verschlusselement zum Verschliessen der Öffnung, ein Haltemittel zur Befestigung des Kabelschutzschlauches an der Unterputzdose, sowie ein Dichtelement zur Abdichtung der Öffnung gegenüber dem Kabelschutzschlauch. Eine Unterputzdose weist in der Regel mehrere Rohreinführungen auf, welche entlang einer oder mehrerer Seitenwände angeordnet sind.

Erfindungsgemäss ist die Rohreinführung so ausgestaltet, dass der Kabelschutzschlauch in axialer Richtung der Öffnung mit dieser wirkverbunden wird. In Ergänzung kann sie aber auch so ausgestaltet sein, dass der Kabelschutzschlauch in transversaler Richtung der Öffnung mit dieser wirkverbunden wird.

In einer Ausführungsform umfasst das Haltemittel einen Stutzen, der mindestens eine (erste) konische Innenfläche aufweist, welche zur Halterung des Kabelschutzschlauches dient. Der Durchmesser der konischen Innenfläche ist dabei zur Öffnung hin abnehmend ausgestaltet, so dass eine Klemmwirkung des in den Stutzen eingeführten Kabelschutzschlauches erzielt wird. In der Regel ist die Querschnittsfläche des Stutzens fluchtend mit der Öffnung angeordnet, so dass ein in den Stutzen eingeführter Kabelschutzschlauch durch die Öffnung mit der Unterputzdose zusammenwirkt, so dass einfach Kabel durchgeführt werden können.

Alternativ oder ergänzend umfasst der Stutzen eine zweite konische Innenfläche, welche mit der ersten konischen Innenfläche durch einen Absatz verbunden ist. Dabei ist generell die erste konische Innenfläche von geringerem Durchmesser als die zweite konische Innenfläche. Die erste konische Innenfläche liegt proximal zur Öffnung, wohingegen die zweite konische Innenfläche distal zur Öffnung liegt. Ein solcher Stutzen bildet eine so genannte Kombieinführung, bei welcher durch die zwei konischen Innenflächen verschiedene Kabelschutzschläuche mit unterschiedlichen Durchmessern durch Klemmwirkung mit dem Stutzen wirkverbindbar sind. Dabei sind Ausführungsformen des Stutzens mit mehr als zwei verschiedenen konischen Innenflächen möglich, so dass der Stutzen zur klemmenden Halterung von verschiedenen Kabelschutzschläuchen mit verschiedenen Durchmessern geeignet ist. Es sind auch Ausführungsformen mit Kombieinführungen ohne konische Innenflächen, sondern geraden Innenflächen denkbar.

Eine Rödellasche kann in allen Ausführungsformen am Haltemittel zur Halterung des Kabelschutzschlauches angeordnet sein. Erfindungsgemäss umfasst das Dichtelement einen Rohranschlag, der die Eindringtiefe des Kabelschutzschlauches begrenzt. Vorteilhafterweise verhindert der Rohranschlag bei anliegendem Kabelschutzschlauch ein Eindringen von Frischbeton in die Unterputzdose. Der Rohranschlag kann in anderen Ausführungsformen auch im Stutzen integriert sein.

Erfindungsgemäss umfasst das Verschlusselement einen mit der Öffnung wirkverbindbaren Deckel. Dieser ist mit dem Haltemittel wirkverbindbar. Der Deckel und das Haltemittel, bzw. der Stutzen, können einstückig ausgebildet sein, wie nachfolgend noch genauer erläutert wird.

Erfindungsgemäss ist der Deckel durch ein Scharnier mit dem Haltemittel wirkverbunden. Gute Funktionalität und auch eine vorteilhafte Herstellung können erzielt werden, wenn das Scharnier ein Band ist. Besonders gute Ergebnisse können erzielt werden, wenn das Band die Rohreinführung und den Deckel integral verbindet, wie nachfolgend noch genauer erläutert wird. Das Band kann z.B. einen rechteckigen oder einen runden Querschnitt oder eine Kombination davon aufweisen. Je nach Anwendungsgebiet sind weitere Ausgestaltungen möglich. Bei Bedarf kann das Band, bzw. das Scharnier, auch eine Sollbruchstelle aufweisen oder als solche dienen. Das das Band kann in Längsrichtung vom Haltemittel zum Deckel verlaufende Fliesshilfen aufweisen. Bei diesen kann es sich z.B. um lokale Verdickungen handeln. Diese können in der Mitte und/oder entlang des Randes des Bandes angeordnet sein.

Die Rohreinführungen gemäss der Erfindung werden mit Vorteil aus Kunststoff, vorzugsweise durch Spritzgusstechnik, hergestellt. Die geometrischen Formen der Rohreinführungen gemäss der Erfindung eignen sich besonders für die Herstellung durch Spritzgiessen.

### KURZE BESCHREIBUNG DER FIGUREN

Aspekte der Erfindung werden nachfolgend anhand von Ausführungsbeispielen im Zusammenhang mit den Figuren näher erläutert. Die Ausführungsformen der Figuren 1 bis 26 fallen nicht unter den Wortlaut des unabhängigen Anspruchs. Es zeigen:
- Fig. 1: eine erste Ausführungsform einer Rohreinführung in perspektivischer Ansicht von oben mit einem eingeführten Kabelschutzschlauch;
- Fig. 2: eine Explosionsdarstellung der Rohreinführung aus Fig. 1 mit einem Stutzen in einer teilweise aufgeschnittenen Darstellung;
- Fig. 3: eine Schnittdarstellung der Rohreinführung aus Fig. 1;
- Fig. 4: eine zweite Ausführungsform einer Rohreinführung in perspektivischer Ansicht von oben mit eingeführtem Kabelschutzschlauch;
- Fig. 5a: die Rohreinführung aus Fig. 4 in perspektivischer Ansicht von unten;
- Fig. 5b: die Rohreinführung aus Fig. 5a mit einem Kabelschutzschlauch eines geringeren Durchmessers;
- Fig. 6: eine perspektivische Ansicht der Rohreinführung aus Fig. 4 ohne Kabelschutzschlauch und mit dem Stutzen in Schnittdarstellung;
- Fig. 7: die Rohreinführung aus Fig. 6 mit herausgebrochenem Verschlusselement;
- Fig. 8: eine dritte Ausführungsform einer Rohreinführung in perspektivischer Ansicht ohne Kabelschutzschlauch;
- Fig. 9: die Rohreinführung aus Fig. 8 mit herausgebrochenem Verschlusselement;
- Fig. 10: die Rohreinführung aus Fig. 9 mit eingeführtem Kabelschutzschlauch;
- Fig. 11: eine vierte Ausführungsform einer Rohreinführung in perspektivischer Ansicht mit eingeführtem Kabelschutzschlauch;
- Fig. 12: eine Schnittdarstellung der Rohreinführung aus Fig. 11 ohne Kabelschutzschlauch mit einem Verschlusselement, welches eine Öffnung der Unterputzdose freigibt, in perspektivischer Ansicht;
- Fig. 13: die Rohreinführung aus Fig. 12 mit dem Verschlusselement, welches die Öffnung der Unterputzdose verschliesst;
- Fig. 14: eine fünfte Ausführungsform einer Rohreinführung in perspektivischer Ansicht ohne Kabelschutzschlauch;
- Fig. 15: die Rohreinführung aus Fig. 14 mit herausgebrochenem Verschlusselement;
- Fig. 16: eine Schnittdarstellung der Rohreinführung aus Fig. 15, mit einem teilweise eingeführten Kabelschutzschlauch;
- Fig. 17: die Rohreinführung aus Fig. 16 mit einem eingeführten Kabelschutzschlauch von grösserem Durchmesser;
- Fig. 18a: eine sechste Ausführungsform einer Rohreinführung in perspektivischer Ansicht mit einem eingeführten Kabelschutzschlauch und einem eingesteckten Verschlusselement;
- Fig. 18b: das Verschlusselement aus Fig. 18a in perspektivischer Ansicht;
- Fig. 19: eine Schnittdarstellung der Rohreinführung aus Fig. 18a
- Fig. 20: eine Schnittdarstellung der Rohreinführung aus Fig. 19 mit einem eingeführten Kabelschutzschlauch grösseren Durchmessers und einer weiteren Ausführungsform des Verschlusselements;
- Fig. 21: eine siebte Ausführungsform einer Rohreinführung in perspektivischer Ansicht ohne Kabelschutzschlauch;
- Fig. 22: die Rohreinführung aus Fig. 21 in einer weiteren perspektivischen Ansicht;
- Fig. 23: die Rohreinführung aus Fig. 22 in perspektivischer Ansicht mit herausgebrochenem Verschlusselement;
- Fig. 24: eine achte Ausführungsform einer Rohreinführung in perspektivischer Ansicht mit eingeführtem Kabelschutzschlauch;
- Fig. 25: die Rohreinführung aus Fig. 24 ohne Kabelschutzschlauch und mit einem geschlossenen Deckel;
- Fig. 26: eine Schnittdarstellung der Rohreinführung aus Fig. 25 mit geöffnetem Deckel;
- Fig. 27: eine erfindungsgemässe (neunte) Ausführungsform einer Rohreinführung ohne Kabelschutzschlauch und mit einem geschlossenen Deckel;
- Fig. 28: eine Schnittdarstellung der Rohreinführung aus Fig. 27 mit geschlossenem Deckel.

### BESCHREIBUNG DER AUSFÜHRUNGSFORMEN

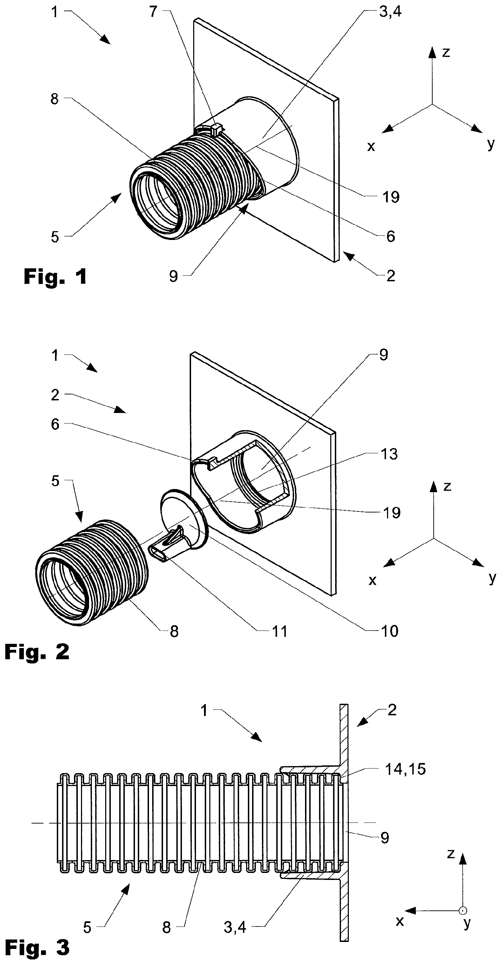

**Figur 1** zeigt eine nicht unter den Schutzumfang der Ansprüche fallende perspektivische Darstellung einer ersten Ausführungsform einer Rohreinführung 1 für eine Unterputzdose 2 (anstelle der gesamten Unterputzdose wird schematisch nur ein Ausschnitt in Form einer rechteckigen Platte gezeigt). Eine Unterputzdose 2 kann mehrere Rohreinführungen aufweisen. Diese sind in der Regel entlang einer oder mehrerer Seitenwände angeordnet.

Die Rohreinführung 1 gemäss der gezeigten Ausführungsform umfasst ein Haltemittel 3 in Form eines Stutzens 4. Ein Kabelschutzschlauch 5 ist axial in den Stutzen 4 eingeführt. In der Figur ist schematisch die axiale Richtung 19 (strichliniert) gezeigt. Der Stutzen 4 weist eine schiefe Endkante 6 auf, welche als Tropfnase dient und die Öffnung 9 vor einlaufendem flüssigem Frischbeton schützen kann. Am distalen Ende der Endkante 6 ist eine Rödellasche 7 angebracht. Diese kann dazu genutzt werden, den Kabelschutzschlauch 5 mit Hilfe eines Rödeldrahtes am Haltemittel 3 zu befestigen, indem der Rödeldraht einerseits an die Rödellasche 7 und andererseits in eine Rille 8 des Kabelschutzschlauches 5 gelegt und festgezogen wird.

**Figur 2** zeigt eine Explosionsdarstellung der Rohreinführung 1 aus **Figur 1****.** Der Stutzen 4 ist in einer teilweise aufgeschnittenen Darstellung gezeigt. Durch die schiefe Anordnung der Endkante 6 dient die Endkante 6 als Tropfnase, welche die Öffnung 9 vor einlaufendem Frischbeton schützen kann. Weiter ist in **Figur 2** eine Ausführungsform eines Verschlusselements 10 gezeigt, das eine Aufnahme 11 für einen Schraubenzieher (Flachschraubenzieher etc.) umfasst. Das Verschlusselement 10 ist in der Figur aus der Öffnung 9 ausgebrochen gezeigt. Vor dem Ausbrechen ist dabei das Verschlusselement 10 über eine Sollbruchstelle 13 integral mit der Unterputzdose 2 wirkverbunden. Die Aufnahme 11 ist auf der Fläche des Verschlusselements 10 exzentrisch angeordnet. Die Aufnahme 11 umfasst eine im Querschnitt längliche Öffnung, welche eine gute Kraftübertragung bewirkt, so dass das Verschlusselement 10 einfach aus der Öffnung 9 ausgebrochen werden kann. Der Stutzen 4 ist derart um die Öffnung 9 angeordnet, dass sein Querschnitt fluchtend mit der Öffnung 9 liegt. Ein mit der Unterputzdose 2 durch die Öffnung 9 wirkverbundener Kabelschutzschlauch 5 liegt somit ebenfalls fluchtend zur Öffnung 9.

**Figur 3** zeigt eine Schnittdarstellung der Rohreinführung 1 aus **Figur 1****.** Die Rohreinführung 1 gemäss der gezeigten Ausführungsform umfasst ein Dichtelement 14, welches einen Rohranschlag 1 5 umfasst. Der Rohranschlag 1 5 begrenzt die Eindringtiefe des Kabelschutzschlauches 5 in axialer Richtung (x-Richtung), so dass der Kabelschutzschlauch 5 derart mit der Unterputzdose 2 wirkverbunden wird, dass das eingeführte Ende des Kabelschutzschlauches 5 im wesentlichen bündig zur Öffnung 9 der Unterputzdose 2 liegt. Der Rohranschlag 15 dient weiter zur Abdichtung der Öffnung 9 und verhindert bei anliegendem Kabelschutzschlauch 5 ein Eindringen von Frischbeton in die Unterputzdose 2. Der Stutzen 4 kann, obwohl nicht explizit in der Figur gezeigt, eine erste konische Innenfläche aufweisen, welche mit einer Klemmwirkung zur Halterung des Kabelschutzschlauches 5 dient. Weiter sind Ausführungsformen des Stutzens 4 mit mehr als zwei verschiedenen konischen Innenflächen von verschiedenem Durchmesser möglich, so dass der Stutzen 4 zur klemmenden Halterung von verschiedenen Kabelschutzschläuchen 5 mit verschiedenen Durchmessern geeignet ist. Dabei liegt die konische Innenfläche mit dem geringeren Durchmesser proximal zur Öffnung 9, wohingegen die konische Innenfläche mit dem grösseren Durchmesser distal zur Öffnung 9 liegt.

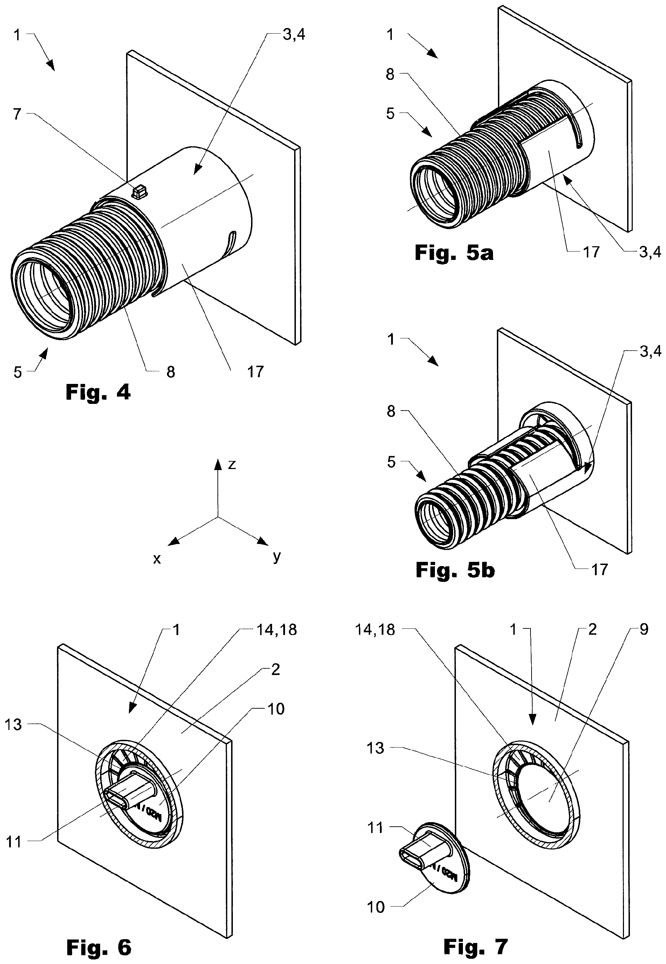

**Figur 4** zeigt eine nicht unter den Schutzumfang der Ansprüche fallende zweite Ausführungsform einer Rohreinführung 1 in perspektivischer Ansicht von oben mit eingeführtem Kabelschutzschlauch 5. Die Rohreinführung 1 gemäss der gezeigten Ausführungsform umfasst ein Haltemittel 3 in Form eines Stutzens 4. Am Stutzen 4 ist eine Rödellasche 7 angeordnet.

**Figur 5a** zeigt die Rohreinführung 1 aus **Figur 4** in perspektivischer Ansicht von unten. Der Stutzen 4 weist einen flexiblen Wandbereich 17 in Form einer Lasche auf, welche den eingeführten Kabelschutzschlauch 5 teilweise umläuft. Der flexible Wandbereich 17 kann um den Kabelschutzschlauch 5 gelegt und zur Halterung an den Kabelschutzschlauch 5 z.B. mit Kabelbindern (nicht dargestellt in der Figur) festgezogen werden.

**Figur 5b** zeigt die Rohreinführung 1 aus **Figur 5a** mit einem Kabelschutzschlauch 5 von geringerem Durchmesser, eingeführt in den Stutzen 4. Durch den flexiblen Wandbereich 17 kann der Kabelschutzschlauch 5 in der Rohreinführung 1 befestigt werden, obwohl der Durchmesser des Kabelschutzschlauches 5 kleiner als der Durchmesser der Basis des Stutzens 4 ist.

**Figur 6** zeigt eine perspektivische Ansicht der Rohreinführung 1 aus **Figur 4** ohne Kabelschutzschlauch 5 und mit dem Stutzen 4 in Schnittdarstellung. Die gezeigte Ausführungsform des Verschlusselements 10 umfasst eine Aufnahme 11 für einen Schraubenzieher (Flachschraubenzieher etc.). Die Aufnahme 11 ist auf der Fläche des Verschlusselements 9 exzentrisch angeordnet. Die Aufnahme 11 umfasst eine im Querschnitt längliche Öffnung, welche eine gute Kraftübertragung bewirkt, so dass das Verschlusselement 10 einfach aus der Öffnung 9 ausgebrochen werden kann. Das Verschlusselement 10 ist über eine Sollbruchstelle 13 integral mit der Unterputzdose 2 wirkverbunden. Im Bereich der Sollbruchstelle 13 sind flexible Lamellen 18 ausgebildet, welche zum Wirkverbinden des Kabelschutzschlauches 5 dienen. Die flexiblen Lamellen 18 sind um das Verschlusselement 10 herum angeordnet. Das Verschlusselement 10 ist gegenüber der Öffnung 9 exzentrisch angeordnet. Die flexiblen Lamellen 18 weisen in Umfangsrichtung unterschiedliche Längen auf. Mit Hilfe der flexiblen Lamellen 18 können Kabelschutzschläuche 5 mit verschiedenen Durchmessern mit der Öffnung 9 dichtend wirkverbunden werden. Die flexiblen Lamellen 18 können sich dabei derart an den Kabelschutzschlauch 5 anordnen, dass die flexiblen Lamellen 18 als Dichtelement 14 dienen.

**Figur 7** zeigt die Rohreinführung 1 aus **Figur 6** mit herausgebrochenem Verschlusselement 10. Die Längen der flexiblen Lamellen 18 sind in Umfangsrichtung unterschiedlich. Der Kabelschutzschlauch 5, der durch die Öffnung 9 eingeführt wird, kann somit teilweise in die Unterputzdose 2 hineinragen. Die flexiblen Lamellen 18 greifen dabei derart in Rillen 8 des Kabelschutzschlauches 5, dass die flexiblen Lamellen 18 die Öffnung 9 gegenüber dem Kabelschutzschlauch 5 abdichten.

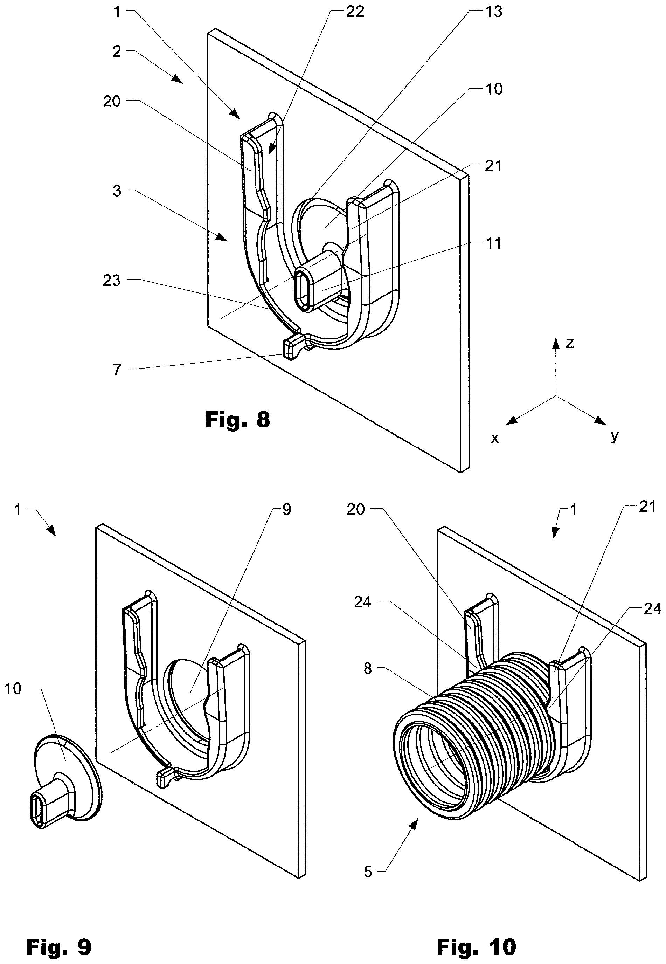

Figur 8 zeigt eine nicht unter den Schutzumfang der Ansprüche fallende dritte Ausführungsform einer Rohreinführung 1 in perspektivischer Ansicht ohne Kabelschutzschlauch 5. Bei der gezeigten Ausführungsform kann der Kabelschutzschlauch 5 in transversaler Richtung (z-Richtung) mit der Öffnung 9 wirkverbunden werden. Die gezeigte Ausführungsform des Haltemittels 3 weist einen ersten Kragen 20 und einen zweiten Kragen 21 auf, die parallel zur Öffnung 9 und zu dieser vorgelagert angeordnet sind. Die Kragen 20, 21 bilden je einen Hintergriff 22, der zur Halterung eines in transversaler Richtung (z-Richtung) in das Haltemittel 3 eingeschobenen gerillten Kabelschutzschlauches 5 geeignet ist. Die Kragen 20, 21 sind mit Vorteil so ausgeformt, dass sie in die Rillen 8 des Kabelschutzschlauches 5 eingreifen und den Kabelschutzschlauch 5 in axialer Richtung (x-Richtung) befestigen. Die Kragen 20, 21 können kraftschlüssig und/oder teilweise formschlüssig mit den Rillen 8 des Kabelschutzschlauches 5 wirkverbunden werden. Die Kragen 20, 21 liegen an gegenüberliegenden Seiten der Öffnung 9 und sind parallel zueinander angeordnet, so dass die Kräfteverteilung bei der Halterung des Kabelschutzschlauches 5 symmetrisch ist. Andere von der parallelen Anordnung abweichende Anordnungen der Kragen 20, 21 sind in anderen Ausführungsformen aber auch möglich. In der gezeigten Ausführungsform sind der erste Kragen 20 und der zweite Kragen 21 durch einen Steg 23, der einen dritten Kragen aufweisen kann, verbunden. Der Steg 23 kann durch Anschlag des eingeführten Kabelschutzschlauches 5 als Begrenzung der transversalen (in z-Richtung) Einführung des Kabelschutzschlauches 5 dienen. Die Kragen 20, 21 und der Steg 23 (der einen dritten Kragen aufweisen kann) umlaufen zusammen teilweise die Öffnung 9 und sind mit einem transversal (in z-Richtung) eingeführten Kabelschutzschlauch 5 kraftschlüssig und/oder teilweise formschlüssig wirkverbindbar. Am Steg 23 (bzw. dritten Kragen) ist eine Rödellasche 7 angeordnet, der zur Befestigung des Kabelschutzschlauches 5 mit Hilfe eines Rödeldrahtes dient. Die Rohreinführung 1 umfasst ein Verschlusselement 10, welches eine Aufnahme 11 für einen Schraubenzieher (Flachschraubenzieher etc.) umfasst. Die Aufnahme 11 ist auf der Fläche des Verschlusselements 10 exzentrisch angeordnet. Die Aufnahme 11 umfasst eine im Querschnitt längliche Öffnung, welche eine gute Kraftübertragung bewirkt, so dass das Verschlusselement 10 einfach aus der Öffnung 9 ausgebrochen werden kann. Das Verschlusselement 10 ist über eine Sollbruchstelle 13 integral mit der Unterputzdose 2 wirkverbunden.

**Figur 9** zeigt die Rohreinführung 1 aus **Figur 8** mit herausgebrochenem Verschlusselement 10.

**Figur 10** zeigt die Rohreinführung 1 aus **Figur 9** mit transversal (in z-Richtung) eingeführtem Kabelschutzschlauch 5. Der erste Kragen 20 und der zweite Kragen 21 umfassen je eine Rastnase 24, welche rastend in die Rillen 8 des Kabelschutzschlauches 5 eingreifen können und so zur Befestigung des Kabelschutzschlauches 5 dienen.

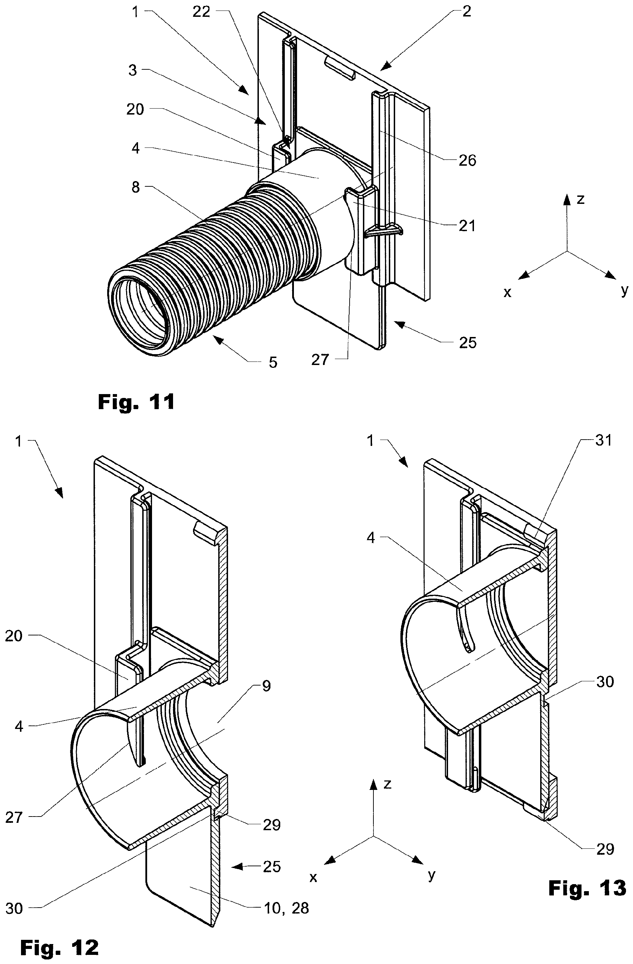

**Figur 11** zeigt eine nicht unter den Schutzumfang der Ansprüche fallende vierte Ausführungsform einer Rohreinführung 1 in perspektivischer Ansicht mit eingeführtem Kabelschutzschlauch 5. Die gezeigte Ausführungsform des Haltemittels 3 weist einen ersten Kragen 20 und einen zweiten Kragen 21 auf, die parallel zur Öffnung 9 und zu dieser vorgelagert angeordnet sind. Die Kragen 20, 21 bilden je einen Hintergriff 22, der zur Halterung eines gerillten Kabelschutzschlauches 5 geeignet ist. Die Kragen 20, 21 sind dabei so ausgeformt, dass sie in die Rillen 8 des Kabelschutzschlauches 5 eingreifen und den Kabelschutzschlauch 5 in axialer Richtung (x-Richtung) befestigen. Die Kragen 20, 21 können kraftschlüssig und/oder teilweise formschlüssig mit den Rillen 8 des Kabelschutzschlauches 5 wirkverbunden werden. Die Kragen 20, 21 liegen an gegenüberliegenden Seiten der Öffnung 9 und sind parallel zueinander angeordnet, so dass die Kräfteverteilung bei der Halterung des Kabelschutzschlauches 5 symmetrisch ist. Andere von der parallelen Anordnung abweichende Anordnungen der Kragen 20, 21 sind in anderen Ausführungsformen aber auch möglich.

Das Haltemittel 3 umfasst in der gezeigten Ausführungsform ein gegenüber den Kragen 20, 21 verschiebbares Schiebeelement 25. Das Schiebeelement 25 ist schiebbar in einem Halterahmen 26 gelagert, wobei der Halterahmen 26 an der Unterputzdose 2 angeordnet ist. Das Schiebeelement 25 ist dabei in transversaler Richtung (z-Richtung) schiebbar. Die Kragen 20, 21 sind am Halterahmen 26 angeordnet. Das Schiebeelement 25 umfasst einen Stutzen 4 zur Aufnahme des Kabelschutzschlauches 5. Der Stutzen 4 umfasst Schlitze 27, welche mit den Kragen 20, 21 wirkverbindbar sind. Die Kragen 20, 21 können in die Schlitze 27, welche seitlich am Stutzen 4 angeordnet sind, eingreifen. Die Schlitze 27 entsprechen im Wesentlichen den Rillen 8 des Kabelschutzschlauches 5, so dass die Kragen 20, 21 gleichzeitig in die Schlitze 27 und in die Rillen 8 des in den Stutzen 4 eingeführten Kabelschutzschlauches 5 eingreifen. Damit wird der eingeführte Kabelschutzschlauch 5 in axialer Richtung (x-Richtung) im Stutzen 4 befestigt.

Diese Ausführungsform kann in besonders vorteilhafterweise für die Herstellung durch Spritzgiessen geeignet sein, zum Beispiel hinsichtlich der Entformung und da zum Beispiel die Rohreinführung und das Schiebeelement separat hergestellt werden können.

**Figur 12** zeigt eine Schnittdarstellung der Rohreinführung 1 aus **Figur 11** ohne Kabelschutzschlauch 5. In der gezeigten Ausführungsform dient das Schiebeelement 25 als Verschlusselement 10. Dies wird dadurch erreicht, dass das Schiebeelement 25 einen flachen Abschnitt 28 umfasst, der durch Verschieben des Schiebeelements 25 die Öffnung 9 verschliesst oder freigibt. Bei der in **Figur 12** gezeigten Position des Schiebeelements 25 ist die Querschnittsfläche des Stutzens 4 mit der Öffnung 9 fluchtend angeordnet, so dass eine Wirkverbindung der Unterputzdose 2 mit dem Kabelschutzschlauch 5 möglich ist. In der gezeigten Ausführungsform umfasst die Unterputzdose 2 eine Rastvorsprung 29, der in eine Rastkerbe 30 rastend eingreifen kann. In der in **Figur 12** gezeigten Position des Schiebeelements 25 sind der Rastvorsprung 29 und die Rastkerbe 30 eingerastet, so dass das Schiebeelement 25 in der gezeigten Position, bei welcher die Öffnung 9 freigegeben ist, festgehalten wird. Damit wird der Kabelschutzschlauch 5 in der gezeigten Ausführungsform in axialer Richtung (x-Richtung) durch die Kragen 20, 21 und in transversaler Richtung (z-Richtung) sowohl durch den Stutzen 4 als auch durch den Rastvorsprung 29 und der Rastkerbe 30 festgehalten. In **Figur 12** ist gezeigt, wie die Kragen 20, 21 durch die Schlitze 27 teilweise in den Stutzen 4 hineinragen und so in die Rillen 8 eines Kabelschutzschlauches 5 eingreifen können.

Der Stutzen 4 umfasst weiter einen Rohranschlag 15, der die Eindringtiefe des Kabelschutzschlauches 5 begrenzt. Der Rohranschlag 15 dient weiter zur Abdichtung der Öffnung 9 und verhindert bei anliegendem Kabelschutzschlauch 5 ein Eindringen von Frischbeton in die Unterputzdose 2. Der Stutzen 4 kann, obwohl nicht explizit in der Figur gezeigt, eine erste konische Innenfläche aufweisen, welche mit einer Klemmwirkung zur Halterung des Kabelschutzschlauches 5 dient. Weiter sind Ausführungsformen des Stutzens 4 mit mehr als zwei verschiedenen konischen Innenflächen von verschiedenem Durchmesser möglich, so dass der Stutzen 4 zur klemmenden Halterung von verschiedenen Kabelschutzschläuchen 5 mit verschiedenen Durchmessern geeignet ist. Dabei liegt die konische Innenfläche mit dem geringeren Durchmesser proximal zur Öffnung 9, wohingegen die konische Innenfläche mit dem grösseren Durchmesser distal zur Öffnung 9 liegt.

**Figur 13** zeigt die Rohreinführung 1 aus **Figur 12** mit dem Schiebeelement 25 in einer Position, in welcher der flache Abschnitt 28 des Verschlusselements 10 die Öffnung 9 verschliesst. In der gezeigten Ausführungsform ist an der Unterputzdose 2 ein Schiebeanschlag 31 angeordnet, welcher die transversale (in z-Richtung) Verschiebung des Schiebeelements 25 begrenzt. In dieser Position dient der Rastvorsprung 29 ebenfalls zur Begrenzung der transversalen (in z-Richtung) Verschiebung des Schiebeelements 25.

Gemäss der in **Figur 11-13** gezeigten Ausführungsform wird der Kabelschutzschlauch 5 in einem ersten Schritt axial in den Stutzen 4 eingeführt, wobei das Schiebeelement 25 in der in **Figur 13** gezeigten Position ist, in welcher die Öffnung 9 verschlossen ist. In einem zweiten Schritt wird der Kabelschutzschlauch 5 samt Schiebeelement 25 in die in **Figur 11** und **Figur 12** gezeigte Position transversal (in z-Richtung) verschoben, so dass die Öffnung 9 freigegeben wird und fluchtend mit dem Kabelschutzschlauch 5 liegt. Dabei greifen die Kragen 20, 21 in die Schlitze 27 des Stutzens 4 und in die Rillen 8 des Kabelschutzschlauches 5 und befestigen diesen im Stutzen 4. Der Rastvorsprung 29 rastet in die Kerbe 30 ein, so dass das Schiebeelement 25 sowie der Kabelschutzschlauch 5 in der in **Figur 11** und **Figur 12** gezeigten Position befestigt sind.

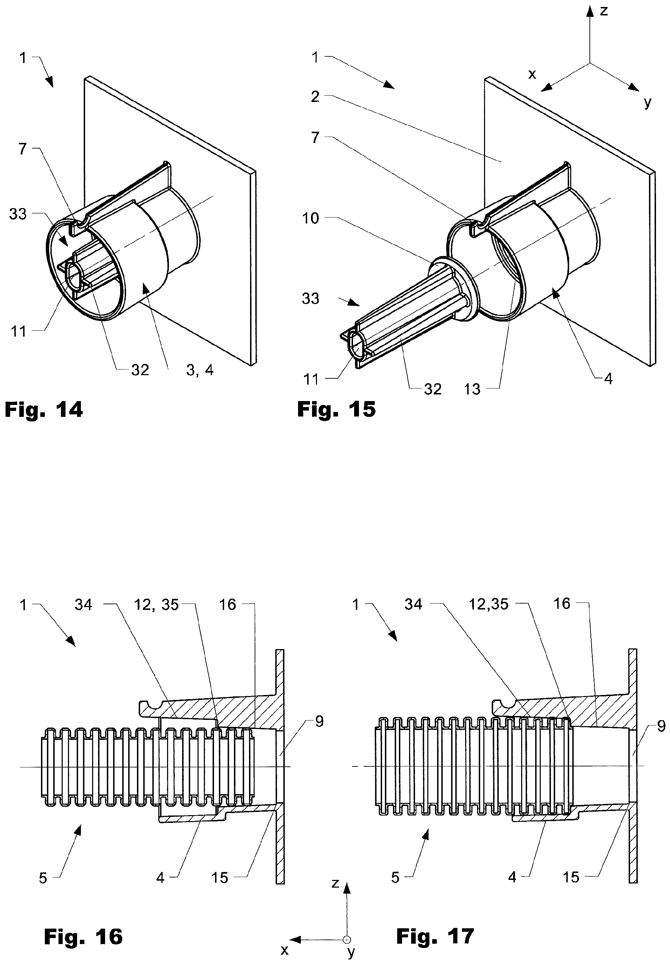

**Figur 14** zeigt eine nicht unter den Schutzumfang der Ansprüche fallende fünfte Ausführungsform einer Rohreinführung 1 in perspektivischer Ansicht ohne Kabelschutzschlauch 5. Die Rohreinführung 1 gemäss der gezeigten Ausführungsform umfasst ein Haltemittel 3 in Form eines Stutzens 4. Am Stutzen 4 ist eine Rödellasche 7 angebracht. Diese kann dazu genutzt werden, den Kabelschutzschlauch 5 mit Hilfe eines Rödeldrahtes am Haltemittel 3 zu befestigen, indem der Rödeldraht einerseits an die Rödellasche 7 und andererseits in eine Rille 8 des Kabelschutzschlauches 5 gelegt und festgezogen wird. Weiter ist in **Figur 14** eine Ausführungsform eines Verschlusselements 10 gezeigt, das eine Aufnahme 11 für einen Schraubenzieher (Flachschraubenzieher etc.) umfasst. Die Aufnahme 11 ist durch seitlich angeordnete Streben 32 abgestützt, welche als Schlagkreuz 33 dienen. Damit kann das Verschlusselement 10 sowohl ausgebrochen oder durchschlagen werden.

**Figur 15** zeigt die Rohreinführung 1 aus **Figur 14** mit herausgebrochenem Verschlusselement 10. Vor dem Ausbrechen ist das Verschlusselement 10 über eine Sollbruchstelle 13 integral mit der Unterputzdose 2 wirkverbunden. Die Aufnahme 11 ist gemäss dieser Ausführungsform auf der Fläche des Verschlusselements 10 konzentrisch angeordnet. Die Aufnahme 11 umfasst eine im Querschnitt längliche Öffnung, welche eine gute Kraftübertragung bewirkt, so dass das Verschlusselement 10 einfach aus der Öffnung 9 ausgebrochen werden kann. Die Streben 32 bilden zusammen mit der Aufnahme 11 ein Schlagkreuz 33, so dass das Verschlusselement 10 alternativ auch durchschlagen werden kann. Der Stutzen 4 ist derart um die Öffnung 9 angeordnet, dass sein Querschnitt fluchtend mit der Öffnung 9 liegt. Ein mit der Unterputzdose 2 durch die Öffnung 9 wirkverbundener Kabelschutzschlauch 5 liegt somit ebenfalls fluchtend zur Öffnung 9.

**Figur 16** und **Figur 17** zeigen Schnittdarstellungen der Rohreinführung 1 aus **Figur 15** mit zwei Kabelschutzschläuchen 5 mit verschiedenen Durchmessern. Der Stutzen 4 weist eine erste konische Innenfläche 16 auf, welche zur Halterung des Kabelschutzschlauches 5 dient. Der Durchmesser der ersten konischen Innenfläche 16 ist dabei zur Öffnung 9 hin abnehmend ausgestaltet, so dass eine Klemmwirkung des in den Stutzen 4 eingeführten Kabelschutzschlauches 5 erzielt wird. Weiter umfasst der Stutzen 4 in der gezeigten Ausführungsform eine zweite konische Innenfläche 34, welche mit der ersten konischen Innenfläche 16 durch einen Absatz 35 verbunden ist. Dabei ist die erste konische Innenfläche 16 von geringerem Durchmesser als die zweite konische Innenfläche 34. Die erste konische Innenfläche 16 liegt proximal zur Öffnung 9, wohingegen die zweite konische Innenfläche 34 distal zur Öffnung 9 liegt. Ein solcher Stutzen 4 bildet eine so genannte Kombieinführung, bei welcher durch die zwei konischen Innenflächen 16, 34 verschiedene Kabelschutzschläuche 5 mit unterschiedlichen Durchmessern durch Klemmwirkung mit dem Stutzen 4 wirkverbindbar sind. Dabei sind Ausführungsformen des Stutzens 4 mit mehr als zwei verschiedenen konischen Innenflächen möglich, so dass der Stutzen 4 zur klemmenden Halterung von verschiedenen Kabelschutzschläuchen 5 mit verschiedenen Durchmessern geeignet ist.

In **Figur 16** ist der Kabelschutzschlauch 5 teilweise in den Stutzen 4 eingeführt gezeigt, so dass der Kabelschutzschlauch 5 nicht am vorderen Rohranschlag 15 anliegt. Der vordere Rohranschlag 15 begrenzt die Eindringtiefe des Kabelschutzschlauches 5 in axialer Richtung (x-Richtung), so dass der Kabelschutzschlauch 5 derart mit der Unterputzdose 2 wirkverbunden wird, dass das eingeführte Ende des Kabelschutzschlauches 5 im wesentlichen bündig zur Öffnung 9 der Unterputzdose 2 liegt. Der vordere Rohranschlag 15 dient weiter zur Abdichtung der Öffnung 9 und verhindert bei anliegendem Kabelschutzschlauch 5 ein Eindringen von Frischbeton in die Unterputzdose 2.

In **Figur 17** ist ein Kabelschutzschlauch 5 von grösserem Durchmesser als der Kabelschutzschlauch 5 gemäss **Figur 16** gezeigt. Der Kabelschutzschlauch 5 liegt am Absatz 35 an, welcher damit gleichzeitig als hinterer Rohranschlag 12 dient.

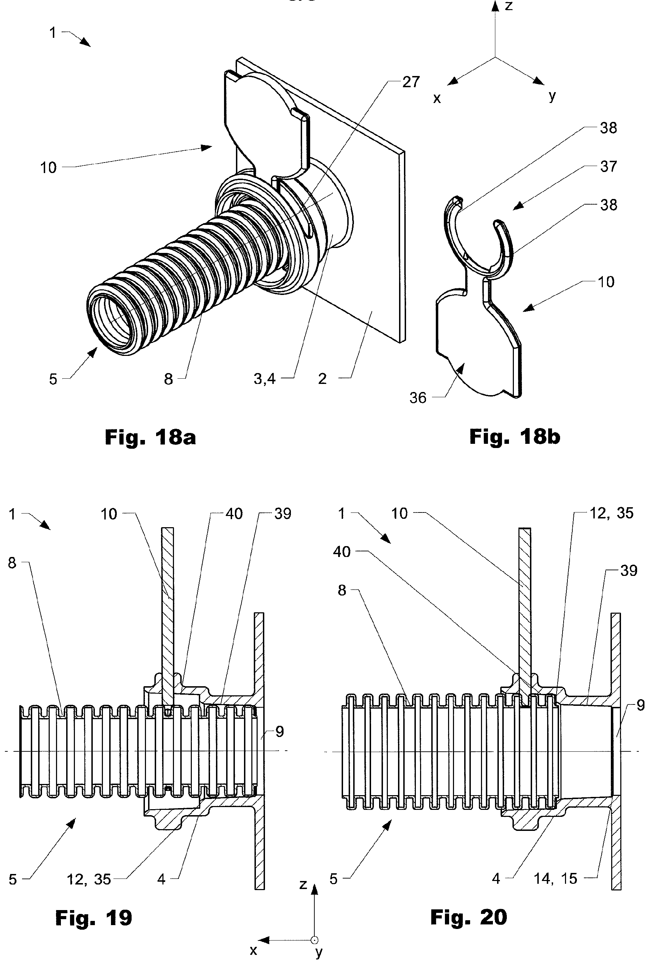

**Figur 18a** zeigt eine nicht unter den Schutzumfang der Ansprüche fallende sechste Ausführungsform einer Rohreinführung 1 in perspektivischer Ansicht mit einem eingeführten Kabelschutzschlauch 5. Die Rohreinführung 1 gemäss der gezeigten Ausführungsform umfasst ein Haltemittel 3 in Form eines Stutzens 4. Im Stutzen 4 ist ein Verschlusselement 10 eingesteckt. Das Verschlusselement 10 ist als separates Zwischenstück ausgestaltet, welches in einen Schlitz 27 des Stutzens 4 eingesteckt werden kann.

**Figur 18b** zeigt das Verschlusselement 10 aus **Figur 18a** in perspektivischer Ansicht. Das Verschlusselement 10 umfasst ein flaches erstes Endstück 36 und ein zweites Endstück 37 mit Bügeln 38, wobei das erste Endstück 36 die Öffnung 9 verschliessend mit dem Haltemittel 3 wirkverbindbar ist. Dies wird dadurch erreicht, dass das flache erste Endstück 36 in den Schlitz 27 des Stutzens 4 eingesteckt wird. Das zweite Endstück 37 ist zur Halterung des Kabelschutzschlauches 5 mit dem Haltemittel 3 wirkverbindbar, was dadurch erreicht wird, dass das zweite Endstück 37 in den Schlitz 27 des Stutzens 4 eingesteckt wird. Dabei greifen die Bügel 38 in die Rillen 8 des Kabelschutzschlauches 5 und befestigen dieses in axialer Richtung (x-Richtung).

**Figur 19** und **Figur 20** zeigen Schnittdarstellungen der Rohreinführung 1 aus **Figur 18a** mit in den Stutzen 4 eingeführten Kabelschutzschläuchen 5 von verschiedenen Durchmessern. Der Stutzen 4 weist eine erste Innenfläche 39 und eine zweite Innenfläche 40 auf, die durch einen Absatz 35 miteinander verbunden sind. Dabei ist die erste Innenfläche 39 von geringerem Durchmesser als die zweite Innenfläche 40. Die erste Innenfläche 39 liegt proximal zur Öffnung 9, wohingegen die zweite Innenfläche 40 distal zur Öffnung 9 liegt. Der Stutzen 4 in der gezeigten Ausführungsform bildet eine so genannte Kombieinführung, bei welcher durch die zwei Innenflächen 39, 40 verschiedene Kabelschutzschläuche 5 mit unterschiedlichen Durchmessern mit dem Stutzen 4 wirkverbindbar sind. Dabei sind Ausführungsformen des Stutzens 4 mit mehr als zwei verschiedenen Innenflächen möglich, so dass der Stutzen 4 zur Halterung von verschiedenen Kabelschutzschläuchen 5 mit verschiedenen Durchmessern geeignet ist.

In **Figur 19** ist ein Kabelschutzschlauch 5 von geringerem Durchmesser in den Stutzen 4 eingeführt. Das Verschlusselement 10 ist mit dem zweiten Endstück 37 in den Schlitz 27 des Stutzens 4 eingesteckt, wobei die Bügel 38 in eine Rille 8 des Kabelschutzschlauches 5 eingreifen und diese in axialer Richtung (x-Richtung) befestigen. Die Rohreinführung 1 gemäss der gezeigten Ausführungsform umfasst ein Dichtelement 14, welches einen vorderen Rohranschlag 15 und einen hinteren Rohranschlag 12 umfasst. Der vordere Rohranschlag 15 begrenzt die Eindringtiefe des Kabelschutzschlauches 5 in axialer Richtung (x-Richtung), so dass der Kabelschutzschlauch 5 derart mit der Unterputzdose 2 wirkverbunden wird, dass das eingeführte Ende des Kabelschutzschlauches 5 im wesentlichen bündig zur Öffnung 9 der Unterputzdose 2 liegt. Der vordere Rohranschlag 15 dient weiter zur Abdichtung der Öffnung 9 und verhindert bei anliegendem Kabelschutzschlauch 5 ein Eindringen von Frischbeton in die Unterputzdose 2.

In Figur 20 ist ein Kabelschutzschlauch 5 von grösserem Durchmesser in den Stutzen 4 eingeführt. Das Ende Kabelschutzschlauches 5 liegt am Absatz 35 an, welcher damit gleichzeitig als hinterer Rohranschlag 12 dient.

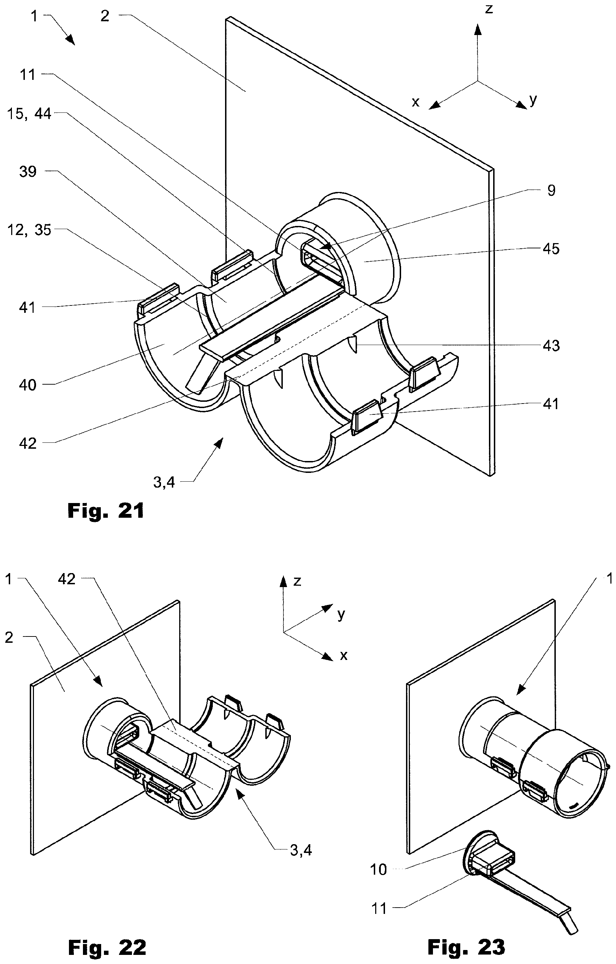

**Figur 21** zeigt eine siebte Ausführungsform einer Rohreinführung 1 in perspektivischer Ansicht ohne Kabelschutzschlauch 5. Das Verschlusselement 10 in der gezeigten Ausführungsform umfasst eine Aufnahme 11 für einen Schraubenzieher (Flachschraubenzieher etc.). Die Rohreinführung 1 gemäss der gezeigten Ausführungsform umfasst ein Haltemittel 3 in Form eines Stutzens 4. Der Stutzen 4 umfasst seitliche Rastelemente 41 und ein seitlich am Stutzen 4 angeordnetes Scharnier 42 zum seitlichen Öffnen und Verschliessen eines Teils des Stutzens 4, wobei die seitlichen Rastelemente 41 beim Verschliessen des Stutzens 4 den Kabelschutzschlauch 5 befestigend einrastbar sind. In **Figur 21** ist der Stutzen 4 geöffnet gezeigt. Der Stutzen 4 gemäss der gezeigten Ausführungsform umfasst weiter Haltenasen 43, welche beim Verschliessen des Stutzens 4 in Rillen 8 des Kabelschutzschlauches 5 eingreifen und dieses in axialer Richtung (x-Richtung) befestigen.

Der durch das Scharnier 42 verschliessbare Teil des Stutzens 4 weist eine erste Innenfläche 39 und eine zweite Innenfläche 40 auf, die durch einen Absatz 35 miteinander verbunden sind. Dabei ist die erste Innenfläche 39 von geringerem Durchmesser als die zweite Innenfläche 40. Die erste Innenfläche 39 liegt proximal zur Öffnung 9, wohingegen die zweite Innenfläche 40 distal zur Öffnung 9 liegt. Der Stutzen 4 in der gezeigten Ausführungsform bildet eine so genannte Kombieinführung, bei welcher durch die zwei Innenflächen 39, 40 verschiedene Kabelschutzschläuche 5 mit unterschiedlichen Durchmessern mit dem Stutzen 4 wirkverbindbar sind. Bei einem Kabelschutzschlauch 5 mit grösserem Durchmesser kann der Absatz 35 gleichzeitig als hinterer Rohranschlag 12 dienen.

Die erste Innenfläche 39 des verschliessbaren Teils des Stutzens 4 ist durch einen Basisabsatz 44 mit einem Basisabschnitt 45 des Stutzens 4 wirkverbunden, wobei der Basisabsatz 44 als vorderer Rohranschlag 15 dienen kann.

Es sind ebenso Ausführungsformen des Stutzens 4 mit mehr als zwei verschiedenen Innenflächen möglich, so dass der Stutzen 4 zur Halterung von verschiedenen Kabelschutzschläuchen 5 mit verschiedenen Durchmessern geeignet ist.

**Figur 22** zeigt die Rohreinführung 1 aus **Figur 21** in einer weiteren perspektivischen Ansicht.

**Figur 23** zeigt die Rohreinführung 1 aus **Figur 22** in perspektivischer Ansicht mit herausgebrochenem Verschlusselement 10. Der Stutzen 4 ist verschlossen gezeigt. Vor dem Ausbrechen ist dabei das Verschlusselement 10 über eine Sollbruchstelle 13 integral mit der Unterputzdose 2 wirkverbunden. Die Aufnahme 11 umfasst eine im Querschnitt längliche Öffnung, welche eine gute Kraftübertragung bewirkt, so dass das Verschlusselement 10 einfach aus der Öffnung 9 ausgebrochen werden kann.

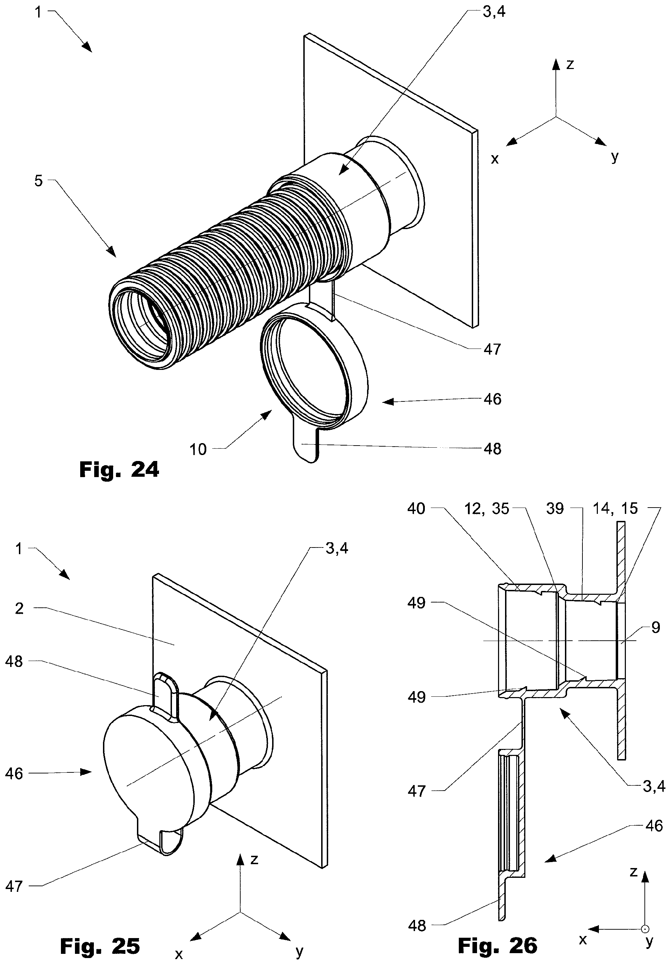

**Figur 24** zeigt eine nicht unter den Schutzumfang der Ansprüche fallende achte Ausführungsform einer Rohreinführung 1 in perspektivischer Ansicht mit eingeführtem Kabelschutzschlauch 5. Die Rohreinführung 1 gemäss der gezeigten Ausführungsform umfasst ein Haltemittel 3 in Form eines Stutzens 4. In der gezeigten Ausführungsform umfasst das Verschlusselement 10 einen Deckel 46. Der Deckel 46 ist mit dem Stutzen 4 wirkverbindbar derart, dass der Deckel 46 den Stutzen 4 dichtend verschliessen kann. Der Deckel ist dabei über ein Deckelscharnier 47 mit dem Stutzen 4 wirkverbunden. In der gezeigten Ausführungsform sind der Deckel 46 mit der Rohreinführung 1 über das Deckelscharnier 47 einstückig ausgestaltet, d.h. der Deckel 46 und die Rohreinführung 1 werden in einem Herstellungsprozess hergestellt. Beim Einspritzen von flüssigem Kunststoff in eine Spritzgiessform (nicht näher dargestellt) wird in der Regel zuerst der Hohlraum für die Rohreinführung 1 mit Kunststoff gefüllt und danach über das Deckelscharnier 47, welches hier als Band ausgestaltet ist, auch der Deckel 46 gefüllt. Je nach Ausführungsform weist das Band 47 einen rechteckigen oder einen runden Querschnitt oder eine Kombination davon auf. Je nach Anwendungsgebiet sind weitere Ausgestaltungen möglich. Bei Bedarf kann das Band auch eine Sollbruchstelle aufweisen oder als solche dienen. Das Band 47 kann in Längsrichtung von der Rohreinführung 1 zum Deckel 46 verlaufende Fliesshilfen aufweisen. Bei diesen kann es sich z.B. um lokale Verdickungen handeln. Diese können in der Mitte und/oder entlang des Randes angeordnet sein. Die Oberfläche im Bereich des Bandes 47 weist mit Vorteil eine hohe Qualität auf. Dies kann damit erreicht werden, dass die zu Herstellung verwendete Spritzgiessform in diesem Bereich fein poliert wird. Ein Vorteil der gezeigten Ausführungsform besteht darin, dass Fertigungstoleranzen einfach ausgeglichen werden können, weil durch die feste Verbindung sichergestellt werden kann, dass immer der selbe Deckel 46 mit derselben Rohreinführung 1 verbunden wird. Bei einem von der Rohreinführung 1 losgelösten Deckeln 46 ist dies nicht gewährleistet, da eine Spritzgiessform zur Herstellung von Deckeln 46 mehrere Kavitäten mit u. U. leichten Abweichungen aufweist, kann nicht vorhergesagt werden, welcher Deckel mit welcher Rohreinführung verbunden wird. Es kann somit zu einer negativen Überlagerung von Toleranzen kommen. Ein weiterer Vorteil besteht darin, dass der logistische Aufwand durch die gezeigte Lösung deutlich reduziert werden kann, da eine separate Handhabung der Deckel 46 entfällt.

**Figur 25** zeigt die Rohreinführung 1 aus **Figur 24** ohne Kabelschutzschlauch 5 und mit dem Deckel 46 in einer den Stutzen 4 verschliessenden Position. Der Deckel 46 umfasst eine Deckellasche 48, an welcher der Deckel 46 gegriffen werden kann.

**Figur 26** zeigt eine Schnittdarstellung der Rohreinführung 1 aus **Figur 25** mit geöffnetem Deckel 46. Die Rohreinführung 1 gemäss der gezeigten Ausführungsform umfasst ein Dichtelement 14, welches einen vorderen Rohranschlag 15 und einen hinteren Rohranschlag 12 umfasst. Der vordere Rohranschlag 15 begrenzt die Eindringtiefe des Kabelschutzschlauches 5 in axialer Richtung (x-Richtung), so dass der Kabelschutzschlauch 5 derart mit der Unterputzdose 2 wirkverbunden wird, dass das eingeführte Ende des Kabelschutzschlauches 5 im wesentlichen bündig zur Öffnung 9 der Unterputzdose 2 liegt. Der vordere Rohranschlag 15 dient weiter zur Abdichtung der Öffnung 9 und verhindert bei anliegendem Kabelschutzschlauch 5 ein Eindringen von Frischbeton in die Unterputzdose 2.

Der Stutzen 4 weist eine erste Innenfläche 39 und eine zweite Innenfläche 40 auf, die durch einen Absatz 35 miteinander verbunden sind. Dabei ist die erste Innenfläche 39 von geringerem Durchmesser als die zweite Innenfläche 40. Die erste Innenfläche 39 liegt proximal zur Öffnung 9, wohingegen die zweite Innenfläche 40 distal zur Öffnung 9 liegt. Der Stutzen 4 in der gezeigten Ausführungsform bildet eine so genannte Kombieinführung, bei welcher durch die zwei Innenflächen 39, 40 verschiedene Kabelschutzschläuche 5 mit unterschiedlichen Durchmessern mit dem Stutzen 4 wirkverbindbar sind. Bei einem Kabelschutzschlauch 5 mit grösserem Durchmesser kann der Absatz 35 gleichzeitig als hinterer Rohranschlag 12 dienen. Es sind ebenso Ausführungsformen des Stutzens 4 mit mehr als zwei verschiedenen Innenflächen möglich, so dass der Stutzen 4 zur Halterung von verschiedenen Kabelschutzschläuchen 5 mit verschiedenen Durchmessern geeignet ist. Ebenso können die Innenflächen konisch ausgebildet sein.

Die erste und die zweite Innenfläche 39, 40 weisen Widerhaken 49 auf, welche in Rillen 8 des Kabelschutzschlauches 5 eingreifen und dieses in axialer Richtung (x-Richtung) festhalten können.

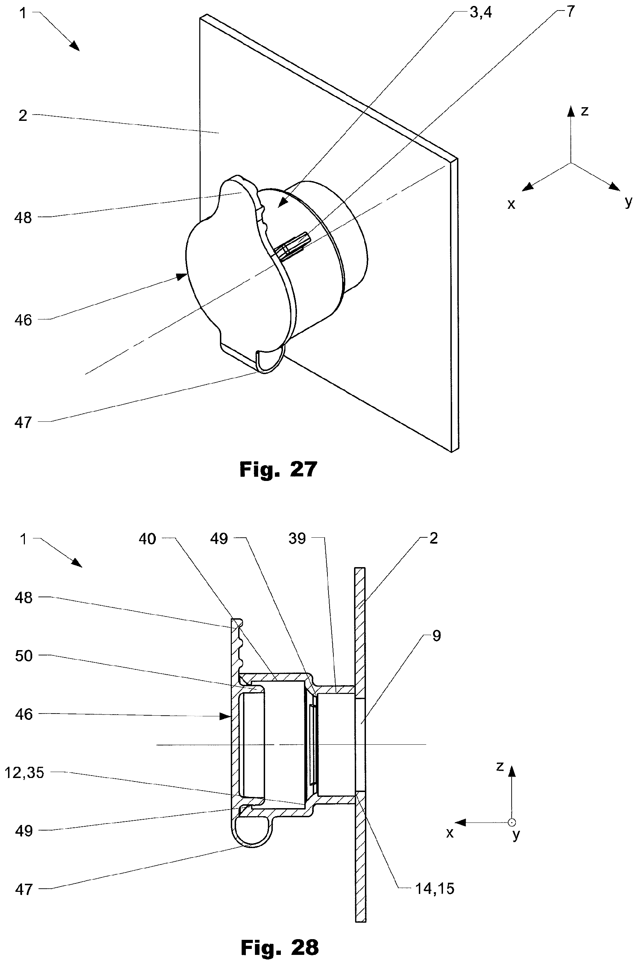

Die **Figuren 27** und **28** zeigen eine Ausführungsform einer Rohreinführung 1 gemäss der Erfindung mit geschlossenem Deckel 46, die auch als Variation der obgenannten achten Ausführungsform angesehen werden kann. Am Haltemittel 3, bzw. am Stutzen 4 ist eine Rödellasche angeordnet, die bei Bedarf dazu genutzt werden kann, einen Kabelschutzschlauch (nicht gezeigt) mit Hilfe eines Rödeldrahtes oder eines Kabelbinders am Haltemittel 3 zu befestigen, indem der Rödeldraht (bzw. Kabelbinder) einerseits an die Rödellasche 7 und andererseits in eine Rille des Kabelschutzschlauches gelegt und festgezogen wird. Eine solche Befestigung kann alternativ oder in Ergänzung zu einer Wirkverbindung zwischen den Widerhaken 49 und Rillen eines Kabelschutzschlauches erfolgen, wie in Bezug auf die **Figuren 24** bis **26** erklärt wurde. Ebenso entspricht die innere Struktur dieser Ausführungsform einer Rohreinführung 1 im Wesentlichen derjenigen der achten Ausführungsform.

Im Unterschied zu der in den **Figuren 24** bis **26** gezeigten achten Ausführungsform wird bei der in den **Figuren 27** und **28** gezeigten Ausführungsform gemäss der Erfindung der Deckel 46 jedoch nicht über das distale Ende des Stutzen 4 gestülpt, sondern umfasst einen rohrförmigen Deckelaufsatz 50, der als eine Art von Pfropf in die distale Öffnung des Stutzens 4 geschoben wird. Auf diese Weise kann insbesondere auch der Materialverbrauch zur Herstellung der Rohreinführung 1 reduziert werden. Der Deckelaufsatz 50 muss nicht rohrförmig sein, sondern kann z.B. auch konisch, bzw. zapfenförmig sein. In der gezeigten Variation der Erfindung wird die Haltung der Deckelaufsatz 50 von den Widerhacken 49 mit einer minimalen Kraft gehalten, so dass der Deckel 46 wenigstens in unbelastetem Zustand in der gezeigten Verschlussstellung verbleibt. Der Deckelaufsatz 50 kann auf seiner Aussenseite bei Bedarf Erhebungen (z.B. in der Form eines umlaufenden Wulstes) oder Vertiefungen aufweisen, um die mechanische Wirkverbindung zwischen Deckelaufsatz 50 und Widerhacken 49 zu verbessern, insbesondere um diese zu verstärken. Um die Rohreinführung 1 zu öffnen, kann an der Deckellasche 48 eine Kraft in x-Richtung aufgebracht werden.

### LISTE DER BEZUGSZEICHEN

1 Rohreinführung
2 Unterputzdose
3 Haltemittel
4 Stutzen
5 Kabelschutzschlauch
6 Endkante
7 Rödellasche
8 Rille
9 Öffnung
10 Verschlusselement
11 Aufnahme
12 hinterer Rohranschlag
13 Sollbruchstelle
14 Dichtelement
15 (vorderer) Rohranschlag
16 erste konische Innenfläche
17 flexibler Wandbereich
18 flexible Lamellen
19 axiale Richtung
20 erster Kragen
21 zweiter Kragen
22 Hintergriff
23 dritter Kragen
24 Rastnase
25 Schiebeelement
26 Halterahmen
27 Schlitz
28 flacher Abschnitt
29 Rastvorsprung
30 Rastkerbe
31 Schiebeanschlag
32 Streben
33 Schlagkreuz
34 zweite konische Innenfläche
35 Absatz
36 erstes Endstück
37 zweites Endstück
38 Bügel
39 erste Innenfläche
40 zweite Innenfläche
41 seitliche Rastelemente
42 Scharnier
43 Haltenasen
44 Basisabsatz
45 Basisabschnitt
46 Deckel
47 Deckelscharnier
48 Deckellasche
49 Widerhaken
50 Deckelaufsatz

## Patentansprüche

1. Rohreinführung (1) für eine Unterputzdose (2), umfassend
a) eine Öffnung (9) zum Wirkverbinden eines Kabelschutzschlauches (5) in eine axiale Richtung (19) der Öffnung (9) mit der Unterputzdose (2),
b) ein Haltemittel (3) in Form eines Stutzens (4) zur Befestigung des Kabelschutzschlauches (5) an der Unterputzdose (2), wobei der Stutzen (4) eine erste Innenfläche (39) und eine zweite Innenfläche (40) aufweist, die durch einen Absatz (35) miteinander verbunden sind, wobei
i. die erste Innenfläche (39) von geringerem Durchmesser als die zweite Innenfläche (40) ist,
ii. die erste Innenfläche (39) proximal zur Öffnung (9), und die zweite Innenfläche (40) distal zur Öffnung (9) liegt, und
iii. die erste und die zweite Innenfläche (39, 40) Widerhaken (49) aufweisen, zum Eingreifen von Rillen (8) des Kabelschutzschlauches (5) und zum Festhalten desselben in die axiale Richtung;
c) ein Verschlusselement (10) zum Verschliessen der Öffnung (9) umfassend einen mit dem Haltemittel (3) wirkverbindbaren Deckel (46), wobei der Deckel (46) über ein Deckelscharnier (47) mit dem Stutzen (4) wirkverbunden ist und der Deckel (46) einen Deckelaufsatz (50) umfasst, welcher in eine distale Öffnung des Stutzens (4) schiebbar ist;
d) sowie ein Dichtelement (14) zur Abdichtung der Öffnung (9) gegenüber dem Kabelschutzschlauch (5) mit einem vorderen Rohranschlag (15) und einem hinteren Rohranschlag (12), wobei der vordere Rohranschlag (15) eine Eindringtiefe des Kabelschutzschlauches (5) in axialer Richtung begrenzt und der Absatz (35) als hinterer Rohranschlag 12 dient; und
e) der Deckelaufsatz (50) derart ausgelegt ist, dass dieser in einer Verschlussstellung des Deckels (46) von den Widerhaken (49) gehalten wird.

2. Rohreinführung (1) gemäss einem der vorangehenden Patentansprüche, wobei die erste und die zweite Innenfläche (39, 40) konisch ausgebildet sind.

3. Rohreinführung (1) gemäss einem der vorangehenden Patentansprüche, wobei am Stutzen (4) eine Rödellasche (7) angeordnet ist.

4. Rohreinführung (1) gemäss einem der vorangehenden wobei das Deckelscharnier (47) ein Band ist.

5. Rohreinführung (1) gemäss Patentanspruch 4, wobei das Band (47) die Rohreinführung (1) und den Deckel (46) integral verbindet.

6. Rohreinführung (1) gemäss einem der vorangehenden Patentansprüche, wobei der Absatz (35) als hinterer Rohranschlag (12) dient.

7. Rohreinführung (1) gemäss einem der vorangehenden Patentansprüche, wobei der Deckelaufsatz (50) rohrförmig oder zapfenförmig oder konisch ausgestaltet ist.

8. Rohreinführung (1) gemäss einem der vorangehenden Patentansprüche, wobei der Deckelaufsatz (50) auf einer Aussenseite Erhebungen oder Vertiefungen aufweist, welche die mechanische Wirkverbindung zwischen dem Deckelaufsatz (50) und den Widerhaken (49) verstärken.

9. Rohreinführung (1) gemäss einem der vorangehenden Patentansprüche, wobei der Deckel (46) eine Deckellasche (48) umfasst, an welcher der Deckel (46) greifbar ist und eine Kraft in die axiale Richtung aufbringbar ist um die Rohreinführung (1) zu öffnen.

10. Unterputzdose (2) umfassend mindestens eine Rohreinführung (1) gemäss einem der vorangehenden Patentansprüche.

## Claims

1. Pipe inlet (1) for a flush-mounted box (2), comprising
a) an opening (9) for operatively connecting a cable protection conduit (5) in an axial direction (19) of the opening (9) to the flush-mounted box (2),
b) a holding means (3) in the form of a socket (4) for fastening the cable protection conduit (5) to the flush-mounted box (2), wherein the socket (4) has a first inner surface (39) and a second inner surface (40) which are connected to one another by a shoulder (35), wherein
i. the first inner surface (39) is of smaller diameter than the second inner surface (40),
ii. the first inner surface (39) is proximal to the opening (9), and the second inner surface (40) is distal to the opening (9), and
iii. the first and second inner surfaces (39, 40) have barbs (49) for engaging grooves (8) of the cable protection conduit (5) and retaining it in the axial direction;
c) a closure element (10) for closing the opening (9), comprising a lid (46) operatively connectable to the holding means (3), the lid (46) being operatively connected to the socket (4) via a lid hinge (47), and the lid (46) comprising a lid attachment (50) which can be pushed into a distal opening of the socket (4);
d) and a sealing element (14) for sealing the opening (9) with respect to the cable protection conduit (5) with a front pipe stop (15) and a rear pipe stop (12), wherein the front pipe stop (1 5) limits a penetration depth of the cable protection conduit (5) in the axial direction and the shoulder (35) serves as rear pipe stop (12); and
e) the lid attachment (50) is configured to be held by the barbs (49) in a closed position of the lid (46).

2. A pipe inlet (1) according to any one of the preceding claims, **wherein** the first and second inner surfaces (39, 40) are conical.

3. Pipe inlet (1) according to any one of the preceding patent claims, **wherein** a wiring lug (7) is arranged at the socket (4).

4. Pipe inlet (1) according to any one of the preceding claims, **wherein** the lid hinge (47) is a strip.

5. Pipe inlet (1) according to claim 4, **wherein** the strip (47) integrally connects the pipe inlet (1) and the lid (46).

6. Pipe inlet (1) according to any one of the preceding claims, **wherein** the shoulder (35) serves as a rear pipe stop (1 2).

7. Pipe inlet (1) according to any one of the preceding patent claims, **wherein** the lid attachment (50) is tubular or peg-shaped or conical.

8. Pipe inlet (1) according to one of the preceding patent claims, **wherein** the lid attachment (50) has elevations or depressions on an outer side, which reinforce the mechanical operative connection between the lid attachment (50) and the barbs (49).

9. Pipe inlet (1) according to any one of the preceding patent claims, **wherein** the lid (46) comprises a lid tab (48) at which the lid (46) can be gripped and a force can be applied in the axial direction to open the pipe inlet (1).

10. Flush-mounted box (2) comprising at least one pipe inlet (1) according to any one of the preceding claims.

## Revendications

1. Entrée de tuyau (1) pour une boîte d'encastrement (2), comprenant:
a) une ouverture (9) pour relier activement d'un conduit de protection de câble (5) dans une direction axiale (19) de l'ouverture (9) avec la boîte d'encastrement (2),
b) un moyen de fixation (3) sous forme d'un manchon (4) pour la fixation le conduit de protection de câble (5) sur la boîte d'encastrement (2), le manchon (4) présentant une première surface intérieure (39) et une deuxième surface intérieure (40) qui sont reliées entre elles par un épaulement (35), où
i. la première surface intérieure (39) est d'un diamètre inférieur à celui de la deuxième surface intérieure (40),
ii. la première surface intérieure (39) est proximale par rapport à l'ouverture (9), et la deuxième surface intérieure (40) est distale par rapport à l'ouverture (9), et
iii. la première et la deuxième surfaces intérieures (39, 40) présentent des barbes (49) pour engager des rainures (8) de le conduit de protection de câble (5) et pour la retenir dans la direction axiale;
c) un élément de fermeture (10) pourfermer l'ouverture (9) comprenant un couvercle (46) pouvant être relié de manière active au moyen de fixation (3), le couvercle (46) étant relié de manière active à le manchon (4) par une charnière de couvercle (47) et le couvercle (46) comprenant un sommet de couvercle (50) qui peut être glissé dans une ouverture distale de le manchon (4);
d) ainsi qu'un élément d'étanchéité (14) pour assurer l'étanchéité de l'ouverture (9) par rapport au conduit de protection de câble (5) avec une butée de tuyau avant (1 5) et une butée de tuyau arrière (1 2), la butée de tuyau avant (15) limitant une profondeur de pénétration du conduit de protection de câble (5) dans la direction axiale et l'épaulement (35) servant de butée de tuyau arrière (12); et
e) le sommet de couvercle (50) est conçu de telle sorte qu'il est maintenu par les barbes (49) dans une position de fermeture du couvercle (46).

2. Entrée de tuyau (1) selon l'une des revendications précédentes, **dans laquelle** la première et la deuxième surface intérieure (39, 40) sont de forme conique.

3. Entrée de tuyau (1) selon l'une des revendications précédentes, **dans laquelle** une languette de tuyau (7) étant disposée sur le manchon (4).

4. Entrée detuyau (1) selon l'une des revendications précédentes, **dans laquelle** la charnière de couvercle (47) est une bande.

5. Entrée de tuyau (1) selon la revendication 4, **dans laquelle** la bande (47) relie intégralement l'entrée de tuyau (1) et le couvercle (46).

6. Entrée de tuyau (1) selon l'une des revendications précédentes, **dans laquelle** l'épaulement (35) sert de butée de tuyau arrière (12).

7. Entrée detuyau (1) selon l'une des revendications précédentes, **dans laquelle** le sommet de couvercle (50) est de forme tubulair, ou de tourillon ou de cône.

8. Entrée detuyau (1) selon l'une des revendications précédentes, **dans laquelle** le sommet de couvercle (50) présente sur un côté extérieur des saillies ou des creux qui renforcent la liaison mécanique active entre le sommet de couvercle (50) et les barbes (49).

9. Entrée de tuyau (1) selon l'une des revendications précédentes, **dans laquelle** le couvercle (46) comprend une languette de couvercle (48), sur laquelle le couvercle (46) peut être saisi et une force peut être appliquée dans la direction axiale pour ouvrir l'entrée de tuyau (1).

10. Boîte d'encastrement (2) comprenant au moins une entrée de tuyau (1) selon l'une des revendications précédentes.
